# EUROPEAN PATENT APPLICATION

(11) **EP 1 547 565 A2**
(43) Date of publication of application: **29.06.2005**
(21) Application number: 04425195.7
(22) Date of filing: 19.03.2004
(51) Int. Cl.: A61G 15/16, A61C 1/00

(54) **A dental unit**

(30) Priority: 25.03.2003 IT BO20030165
(71) Applicant: CASTELLINI S.p.A., I-40013 Castel Maggiore (Bologna) (IT)
(72) Inventor: Castellini, Franco, 40124 Bologna (IT)
(74) Representative: Lanzoni, Luciano

(57) **Abstract**

A dental unit comprises at least one chair (1), a base (2), positioned next to the chair (1) and mounting a handpiece tray (3). The tray (3) is equipped with a plurality of operative or auxiliary handpieces (4) for dental operations of traditional conservative type and/or for implants. At least one of the handpieces (4a) is fitted with a drive unit (5) consisting of a brushless micromotor presenting a unit (6) for continuously controlling the speed, torque and direction of rotation of the brushless micromotor (5) according to parameters that depend on the type of application, that is, traditional, conservative type operations, implants or endodontic work.

## Description

The present invention relates to a dental unit.

At present, a dental unit in its most basic form typically consists of a chair and a base or column which mounts the main and auxiliary items of dental equipment, including a tray for a main set of handpieces and another tray for an accessory set of handpieces.

The dental unit is normally equipped with a plurality of dental handpieces, divided substantially into instruments, for example, the turbine and the micromotor, used for removal of dental material, and instruments, for example, the syringe and the polymerising lamp, used for complementary stages of dental treatment.

These handpieces may be located, according to function, either on the main tray or on the accessory tray.

Over time, this basic structure has been constantly improved in both the internal and external features of the dental unit. Thus, the latest dental units include sophisticated water and compressed air systems, one or more microprocessor units designed to control the functions of the dental unit, and other technological developments.

These improvements have been applied also - in fact above all - to the operative parts of dental units, for example, the handpieces, and especially micromotors, which the present invention is concerned with in particular. A handpiece typically comprises a first body, constituting the part by which the handpiece is held and which is equipped on the end of it with a head to which a tool (usually a burr) can be fitted.

In micromotor handpieces, the first body is connected to a second body, which houses a motor. The connection is coaxial by means of a quick-release fitting on the respective ends of the two bodies. The second body is in turn connected, at its other end, to an endpiece that supplies water or physiological saline, air for nebulising the liquid, air for cooling the micromotor and electricity for driving the micromotor. The endpiece constitutes the end of a cable that starts at one of the aforementioned handpiece trays on a dental unit and that combines the conduits and wires used to supply the fluids and electricity required for the operation of the handpiece.

The performance of these handpieces, driven by conventional electric motors (whose speed can be controlled by the aforementioned microprocessor means) has reached the highest possible levels in terms of both efficiency and drive variability, giving little room for further improvement: we refer in particular to the variation range with the same gear ratio. Thus, to adapt the handpiece to different working situations requiring different speed ranges, the gear ratio between the parts of the handpiece are changed (in practice, gear parts are changed). Achieving the desired speeds (or rather, controlling the speeds within very wide ranges) and controlling the torque applied to the tools are not however possible by simply changing mechanical parts on the one hand and using a traditional speed control on the other).

The Applicant has therefore designed a handpiece which, instead of a traditional electric motor with brushes, is driven by a brushless motor. The brushless motor, acting in combination with the microprocessor constituting the heart of the system that controls the dental unit, optimises speed control, offers better torque response and silent operation, and reduces friction and heating, thereby increasing the useful life of the motor. In addition to this, the new handpiece can be used for traditional, conservative treatments, implants and orthodontic operations thanks to a constructional architecture - combined with the control unit - that enables it to be fitted with all the tools and accessories currently used on traditional handpieces.

The main characteristics of the brushless micromotor and of the dental unit-brushless micromotor assembly are described in Italian patent applications BO2001A 000051 and BO2001A 000623.

In line with its policy of improvement, the Applicant proposes to add the possibility of performing endodontic operations. That means root canal operations which are usually performed with endodontic reamers or files made of nickel-titanium alloy.

For these operations, it is essential to have extremely precise control of the drive torque, starting from very low values so as to avoid the risk of destroying the root canal (or of opening alternative canals) instead of opening and cleaning the original canal. The speed is also usually limited to values in the order of a few hundred revolutions per minute.

At present, a single motor capable of performing all of these functions, namely, traditional conservative work, implant surgery and endodontic work, is not known.

The aim of the present invention, therefore, is to provide a dental unit having the above mentioned characteristics, that is to say, having operating capabilities covering a very wide range of operations, from traditional conservative work to implant surgery to endodontic work.

The present invention accordingly provides a dental unit comprising at least one chair, a base positioned next to the chair and mounting a handpiece tray. The tray is equipped with a plurality of operative or auxiliary handpieces for dental operations of traditional conservative type and/or for implants. At least one of the handpieces is fitted with a drive unit consisting of a brushless micromotor presenting a unit for continuously controlling the speed, torque and direction of rotation of the brushless micromotor according to parameters that depend on the type of application, that is, traditional conservative operations, implants or endodontic operations.

The technical characteristics of the invention, with reference to the above aims, are clearly described in the claims below and its advantages are apparent from the detailed description which follows, with reference to the accompanying drawings which illustrate a preferred embodiment of the invention provided merely by way of example without restricting the scope of the inventive concept, and in which:
- Figure 1 shows a dental unit according to the present invention in a schematic perspective view with some parts cut away to better illustrate others;
- Figure 2 is a schematic representation, with some parts shown as blocks, of a system for controlling the dental unit of Figure 1 through a handpiece and display page forming part of the dental unit;
- Figure 3 shows another control and activation function that can be implemented on the dental unit of Figure 1;
- Figure 4 shows yet another control and activation function that can be implemented on the dental unit of Figure 1.

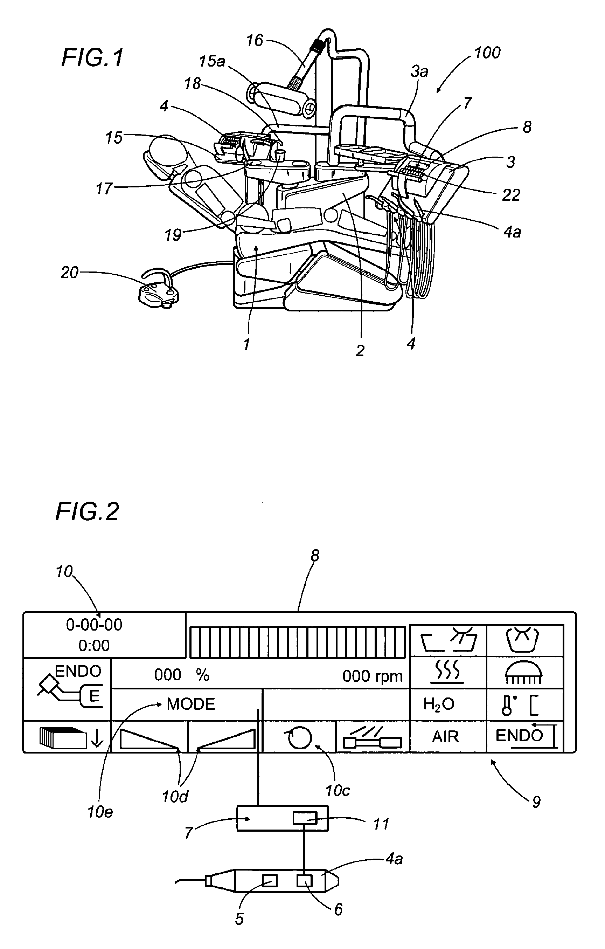

With reference to the accompanying drawings, in particular Figure 1, the dental unit according to the present invention, labelled 100 in its entirety, essentially comprises a chair 1, a base or column 2, located next to the chair 1 and mounting a set of operative and auxiliary elements such as a main handpiece tray 3 on an arm 3a.

Figure 1 also shows a second tray 15 for the dentist's assistant, mounted on a second arm 15a, a lamp 16, a spit bowl 17, a spout 18 for conveying water to a tumbler 19, and a pedal unit 20 for activating the handpieces.

The handpieces 4 are mounted on the two trays 3 and 15 and are divided into operative and auxiliary handpieces for traditional, conservative operations and/or for implant and endodontic surgery.

The dental unit 100 further comprises a microprocessor unit 7 for controlling the main and auxiliary functions of the dental unit 100, that is, the main operative functions of the handpieces, such as, for example, speed, rpm, air and water supply, including the main water supply for the dental unit, activation of disinfection/sterilisation cycles, etc.

The unit 7 may be equipped with a display unit 8 and a keyboard 22, both located, for example, on the tray 3.

In a dental unit 100 structured in this way, at least one of the handpieces, for example the one labelled 4a in Figure 1, is fitted with a drive unit 5 consisting of a brushless micromotor (whose characteristics are not illustrated in detail here since they are fully described in Italian patent applications BO2001A 000051 and BO2001A000623) and presenting a unit 6 for continuously controlling the speed and torque of the brushless micromotor 5 according to parameters that depend on the type of application, that is, traditional, conservative type operations, implant surgery or endodontic work.

Besides these continuously controlled values, the unit 6 preferably also controls the direction of rotation of the handpiece 4a.

Preferably, the unit 6 for continuously controlling the speed of the handpiece 4a is controlled by the microprocessor unit 7 with which it is possible to set the user parameters according to the type of application.

The microprocessor unit 7 calls up on the display unit 8 the display pages 9 selected using the keyboard 22 and comprising a plurality of fields 10 corresponding to functions and main or accessory values relating to the selected handpiece 4 (this structure is clearly specified in patent EP 734.689 to the Applicant and we will not therefore describe all the components, functions and data appearing on these display pages).

In this specific case, the microprocessor unit 7 calls up on the display unit 8 at least one display page 9 comprising a field 10 for selecting an implantolqgical-orthodontic configuration of the handpiece 4a with brushless micromotor.

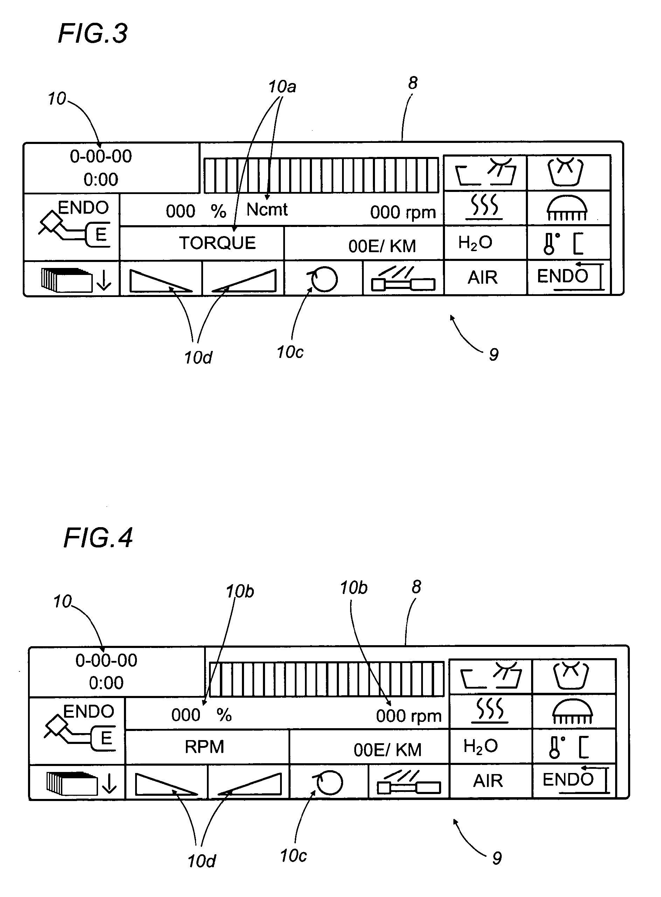

The display page 9 (see Figure 3) includes at least one field 10a containing a given torque value of the handpiece 4a, adjustable using another field 10d and subject, in this configuration, to means 11 for limiting its maximum settable value, the means 11 acting on the unit 6 that controls the handpiece 4a.

Similarly (see Figure 4), the display page 9 includes a field 10b containing a given speed value of the handpiece 4a, adjustable using the field 10d and also subject, in this configuration, to the means 11 for limiting its maximum settable value, the means 11 acting on the unit 6 that controls the handpiece 4a.

With reference to Figures 2, 3 and 4, the display page 9 comprises at least one field 10c relating to the direction of rotation (clockwise or anticlockwise) of the handpiece 4a.

As may be inferred from Figure 2, the limiting means 11 act on the control unit 6 in different ways, according to the settings or modes (selected by the dental surgeon using the field 10e).

This selection is performed on the handpiece 4 mounting tray 3a and may, in a first solution, make it possible to at least temporarily inhibit operation of the handpiece 4a (during treatment) at least upon reaching the maximum preset torque value.

In a second operating mode, the limiting means 11 may act on the control unit 6 in such a way as to reverse the direction of rotation of the handpiece 4a for a predetermined length of time and then at least temporarily inhibit operation of the handpiece 4a at least upon reaching the maximum preset torque value.

In a third operating mode, the limiting means 11 may act on the control unit 6 in such a way as to reverse the direction of rotation of the handpiece 4a for a predetermined length of time and then resume normal operation of the handpiece 4a, again upon reaching the maximum preset torque value.

Thanks to the above structure, the dental unit made according to the invention is further improved and adds a new feature to its already wide range of operative capabilities.

Thus, the possibility of combining traditional handpieces with one or more brushless micromotor handpieces built directly into the dental unit makes it possible to extend the range of operations that can be performed on the patient using normal equipment and the units forming part of the dental unit itself.

Indeed, the brushless handpiece, or handpieces, receives fluids and motive power from the dental unit and the operative part of the handpiece is controlled directly by the microprocessor unit that controls the dental unit.

That means that auxiliary equipment independent of the dental unit, for example, for implant surgery, are no longer necessary.

The control of speed, torque and direction of rotation through the brushless motor enables the handpiece to be used for many different treatments both traditional, without having to change the handpiece, and in precision operations during endodontic treatments.

This is accomplished through appropriate means and settings for limiting and controlling the handpiece in speed, torque and direction of rotation in the configuration for performing endodontic operations, that is to say, root canal operations using appropriate endodontic reamers or files made of nickel-titanium alloy.

Thanks to this control of drive torque and speed, which must be extremely precise, starting from very low values so as to avoid the risk of destroying the root canal, these operations can be carried out with precision and safety to achieve a high level of dental hygiene.

All of this is possible by adding dedicated means for controlling a single micromotor and built into a dental unit having the well known features of sanitizability and supplying of a sterile fluid.

It will be understood that the invention can be modified and adapted in several ways without thereby departing from the scope of the inventive concept. Moreover, all the details of the invention may be substituted by technically equivalent elements.

## Claims

1. A dental unit (100) of the type comprising at least one chair (1), a base (2), positioned next to the chair (1) and mounting at least one handpiece tray (3), the tray (3) being equipped with a plurality of operative or auxiliary handpieces (4) for dental operations of traditional conservative type and/or for implants; the dental unit being **characterised in that** at least one of the handpieces (4a) is fitted with a drive unit (5) consisting of a brushless micromotor presenting a unit (6) for continuously controlling the speed and torque of the brushless micromotor (5) at least according to speed and torque parameters that depend on the type of application, that is, traditional, conservative type operations, implants or endodontic work.

2. The dental unit according to claim 1, **characterised in that** the unit (6) that controls the brushless micromotor handpiece (4a) also enables control of a value equivalent to the direction of rotation of the brushless micromotor (4a).

3. The dental unit according to claims 1 and 2, where the dental unit (100) is fitted with a microprocessor unit (7) for controlling the main and auxiliary functions of the dental unit (100), **characterised in that** the unit (6) for continuously controlling the speed, torque and direction of rotation of the handpiece (4a) is controlled by the microprocessor unit (7).

4. The dental unit according to claim 3, where the microprocessor unit (7) has a display unit (8) showing display pages (9) comprising a plurality of fields (10) corresponding to functions and main or accessory values relating to the selected handpiece (4), the dental unit being **characterised in that** the microprocessor unit (7) calls up on the display unit (8) at least one display page (9) comprising a field (10) for selecting an implantological-orthodontic configuration of the handpiece (4a) with brushless micromotor.

5. The dental unit according to claim 4, **characterised in that** the display page (9) comprises at least one field (10a) containing a given adjustable torque value of the handpiece (4a) and subject to means (11) which limit its maximum settable value and which act on the unit (6) that controls the handpiece (4a).

6. The dental unit according to claim 4, **characterised in that** the display page (9) comprises at least one field (10b) containing a given adjustable speed value of the handpiece (4a) and subject to means (11) which limit its maximum settable value and which act on the unit (6) that controls the handpiece (4a).

7. The dental unit according to claim 4, **characterised in that** the display page (9) comprises at least one field (10c) relating to the direction of rotation of the handpiece (4a).

8. The dental unit according to claim 5, **characterised in that** the limiting means (11) act on the control unit (6) in order to at least temporarily inhibit operation of the handpiece (4a) at least upon reaching the maximum preset torque value.

9. The dental unit according to claim 5, **characterised in that** the limiting means (11) act on the control unit (6) in order to reverse the direction of rotation of the handpiece (4a) for a predetermined length of time and then at least temporarily inhibit operation of the handpiece (4a) at least upon reaching the maximum preset torque value.

10. The dental unit according to claim 5, **characterised in that** the limiting means (11) act on the control unit (6) in order to reverse the direction of rotation of the handpiece (4a) for a predetermined length of time and then resume normal operation of the handpiece (4a) upon reaching the maximum preset torque value.
